# EUROPEAN PATENT APPLICATION

(11) **EP 1 747 832 A1**
(43) Date of publication of application: **31.01.2007**
(21) Application number: 05739072.6
(22) Date of filing: 02.05.2005
(51) Int. Cl.: B23D 61/04, B27B 33/08

(54) **TIP SAW**

(30) Priority: 14.05.2004 JP 2004145309
(71) Applicant: KANEFUSA KABUSHIKI KAISHA, Niwa-gun, Aichi 480-0192 (JP)
(72) Inventor: NISHIO, Satoru, c/o Kanefusa Kabushiki Kaisha, Niwa-gun, Aichi 480-0192 (JP); IINUMA, Tomoyuki, c/o Kanefusa Kabushiki Kaisha, Niwa-gun, Aichi 480-0192 (JP)
(74) Representative: Kuhnen & Wacker
(86) International application number: PCT/JP2005/008731
(87) International publication number: WO 2005/110655

(57) **Abstract**

A tipped saw blade 10 is comprised of a disc-like base metal 11 and tooth bodies 12 projecting outward in a diametrical direction from plural positions continuously spaced at equal intervals on an outer periphery of the base metal 11. The first tips C1 and the second tips C2 are disposed and fixed on a front face in a rotational direction of each of plural tooth bodies 12 in such a way that two first tips C1 and a second tip C2 repeatedly appear in this order. The first tip C1 has a Kerf cutting dimension S1 at a position at which a maximum width W1 is reached, and its rotational radius at the position at which the maximum width W1 is reached is R1. The second tip C2 has a Kerf cutting dimension S2 at a position at which a maximum width W2 is reached, and its rotational radius, at the position at which the maximum width W2 is reached, is R1. The Kerf cutting dimension S2 is shorter than the Kerf cutting dimension by 0.01 to 0.05 mm.

## Description

### TECHNICAL FIELD

The present invention relates to a tipped saw blade for use in processing of materials such as woods, woody materials, plastics, and metals, and more particularly to a tipped saw blade in which vibration is unlikely to occur at a time of cutting.

### BACKGROUND ART

As this kind of the tipped saw blade, conventionally, there has been known a tipped saw blade that has B-type carbide tips and is formed of flat cutting edges symmetrical in only a width direction, as described in the JIS handbook "Japan Industrial Standards Carbide Circular Saws B4805-1989" published in 2003 by the Japanese Standards Association, as well as a tipped saw blade having D-type carbide tips which combines high mountain-like cutting edges and low flat cutting edges, each symmetrical in a width direction. The B-type tipped saw blade secures flatness of a cutting surface of a material being cut by cutting with its flat cutting edges. The D-type tipped saw blade cuts mainly with its high mountain-like cutting edges and then secures the flatness of a surface of a material being cut mainly with its low flat cutting edges. In the D-type tipped saw blade, because the burden of the cutting function is shared by the high mountain-like cutting edges and the low flat cutting edges, cutting resistance is of a lower level than in the case of the B-type tipped saw blade which is constituted of only identical flat cutting edges. However, both the B-type and the D-type tipped saw blades entail disadvantages insofar that cutting vibration tends to occur while a material is being cut, a tooth mark is consequently clearly formed on the surface of the material, leading to a deterioration in the quality of the product and to edge portions on the front and rear of the surface that is being cut tending to become chipped.

The aim of the present invention is to solve the above-described problem and to provide a tipped saw blade that is capable of inhibiting cutting vibration when a material such as wood is being cut, and of thereby securing the quality of a surface of the material being cut.

### DISCLOSURE OF THE INVENTION

From a structural viewpoint a characteristic in terms of achieving the above-described object is that the present invention is a tipped saw blade that includes a plurality of tooth bodies projecting outward in a diametrical direction at plural positions along the outer periphery of a disc-like base metal while a hard tip having a cutting edge symmetrical in a width direction is disposed on the outer peripheral side of each tooth body. First tips each have a Kerf cutting dimension S1, which is a distance between an end portion in a width direction and a side face of the tooth body at a position at which a maximum width W1 is reached, and have a rotational radius R1 at a position at which the maximum width W1 is reached. Second tips each have a Kerf cutting dimension S2 at a position at which a maximum width W2 is reached, and have a rotational radius that is substantially R1 at a position at which the maximum width W2 is reached. The first tips and the second tips are arranged consecutively in such a way that two or three first tips first appear and then a single second tip appears, and the Kerf cutting dimension S2 is shorter than the Kerf cutting dimension S1 by 0.01 to 0.05 mm. Further, a difference between the Kerf cutting dimension S1 and the Kerf cutting dimension S2 is preferably within a range of 0.01 to 0.05 mm and more preferably, within a range of 0.02 to 0.03 mm.

In the present invention with the above-described structure, tips having different Kerf cutting dimensions are mixed in a plurality of tooth bodies provided on an outer periphery of the base metal of the tipped saw blade, and disposed consecutively in such a way that after two or three first tips appear, a single second tip with a shorter Kerf cutting dimension than the first tip appears. Thus, according to the present invention, in comparison with a conventional tipped saw blade in which tips of a single kind are disposed cutting vibration at a time that material is being cut can be significantly reduced. Furthermore, if the difference between the Kerf cutting dimension S1 and the Kerf cutting dimension S2 is less than 0.01 mm, the tipped saw blade becomes similar to the conventional tipped saw blade and the degree of cutting vibration is intensified. If, moreover, the difference between the two dimensions S1 and S2 is larger than 0.05 mm, the degree of cutting vibration also increases because the difference in dimension between the first tip and second tip in a width direction is too big.

According to the present invention, it is also permissible if a third tip appears that has a Kerf cutting dimension S3 which is shorter than the Kerf cutting dimension S1 at a position at which the maximum width W3 is reached, and at which a rotational radius R3 at the position at which the maximum width W3 is reached, is shorter than the rotational radius R1. Such a third tip may appear between individual first tips, and/or between first tips and second tips, as a single tip, or on occasions it may not appear at all. By adding third tips so that they appear between first tips, and/or between first tips and second tips, as either single tips, or not at all, the same effects can be obtained as in the above-described invention.

Further, according to the present invention, it is also permissible if a fourth tip appears that has a Kerf cutting dimension S4 which is shorter than the cutting dimension S2 at a position at which a maximum width W4 is reached, and at which a rotational radius R4, at the position at which the maximum width W4 is reached, is larger than the rotational radius R1. Such a fourth tip may appear between individual first tips, and/or between first tips and second tips, as a single tip, or on occasions it may not appear at all. By adding fourth tips so that they appear between individual first tips, and/or between first tips and second tips, as either single tips, or not at all, the same effects can be obtained as in the above-described invention.

According to the present invention, the degree of cutting vibration of the tipped saw blade can be inhibited by providing a plurality of tooth bodies formed on the outer periphery of the base metal of the tipped saw blade, with an alignment of repetitions of two or three first tips having a Kerf cutting dimension S1 at a position at which the maximum width W1 is reached, and having a rotational radius R1, and of single second tips that have a S2 whose Kerf cutting dimension is shorter than the S1 by 0.01 to 0.05 mm at a position at which the maximum width W2 is reached and a rotational radius that is substantially R1. As a result, the present invention can prevent with a degree of certitude a deterioration in the quality of surfaces that is clearly caused by the formation of tooth marks on surfaces that are being cut, tooth marks that result in cutting vibration, and a deterioration in quality caused by the chipping of an edge portions at the front and rear of the surfaces being cut. Further, by adding third tips, or fourth tips, so that the third tips, or the fourth tips, appear between individual first tips, and/or between first tips and second tips, as either single tips, or not at all, the same effects can be obtained.

### BRIEF DESCRIPTION OF THE DRAWINGS

FIG. 1 is a side view showing a tipped saw blade according to an embodiment of the present invention partially;
FIG. 2 is a front view showing a first tip and second tip constituting the tipped saw blade of the first embodiment in enlargement;
FIG. 3 is a front view showing a first tip and second tip constituting a tipped saw blade according to a modification in enlargement;
FIG. 4 is a front view showing a first tip, a second tip and a third tip constituting the tipped saw blade of the second embodiment in enlargement;
FIG. 5 is a front view showing a first tip, a second tip and a fourth tip constituting the tipped saw blade of the third embodiment in enlargement; and
FIG. 6 is a plan view showing tips in which a cutting surface constituting the tipped saw blade is flat, or a circularly dented curved surface.

### BEST MODE FOR CARRYING OUT THE INVENTION

Hereinafter an embodiment of the present invention will be described.

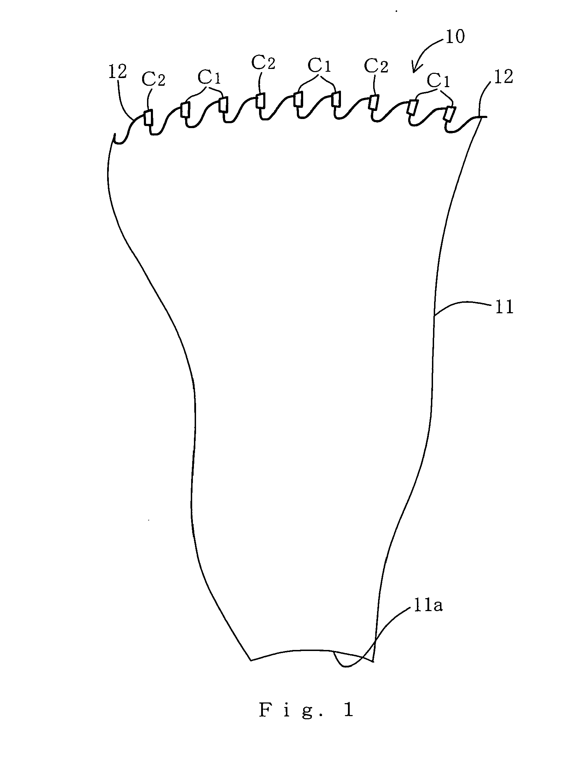

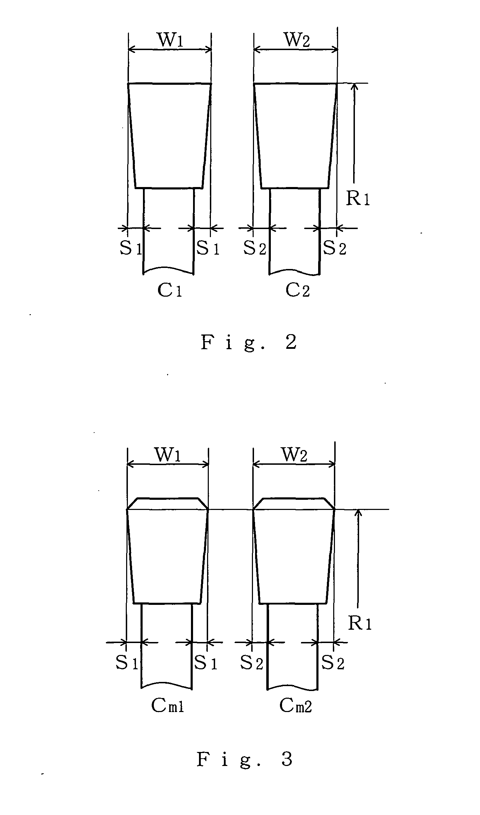

FIG. 1 is a side view showing part of the tipped saw blade for cutting wood according to a first embodiment. FIG. 2 is a front view showing a first tip and second tip attached to the same tipped saw blade. A tipped saw blade 10 is provided with a base metal 11 having a circular central shaft hole 11a, and tooth bodies 12 are formed in such a way that they project outwardly in the diametrical direction from plural positions spaced continuously at equal intervals on the outer periphery of the base metal 11. The tips are disposed and fixed onto front faces of plural tooth bodies 12 in a rotational direction such that first two first tips C1 and then a second tip C2 repeatedly appear in this order. The side face cutting edges of both the first and second tips C1, C2 have positive radial angles.

The first tip C1 has a Kerf cutting dimension S1 which, as shown in FIG. 2, is a distance between an end portion in a width direction of a tooth body 12 and a side face of the tooth body 12 at a position at which a maximum width W1 is reached, and a rotational radius, at the position at which the maximum width W1 is reached is R1. Further, the second tip C2 has a Kerf cutting dimension S2 at a position at which a maximum width W2 is reached, and a rotational radius, at the position at which the maximum width W2 is reached, is substantially R1. The kerf cutting dimension S2 is shorter than the Kerf cutting dimension S1 by 0.01 to 0.05 mm. Moreover, the rotational radius of the second tip C2 may be within a range of ±0.1 mm with respect to the rotational radius R1 of the first tip C1.

In the first embodiment having the above-described structure, tips having different Kerf cutting dimensions are mixed in the plurality of tooth bodies 12 provided on the outer periphery of the base metal 11 of the tipped saw blade 10 and disposed repeatedly in an order such that a second tip C2 having a shorter Kerf cutting dimension S2 than the first tip appears after two first tips C1 appear. For this reason, in comparison with a conventional tipped saw blade in which tips of a single kind are disposed, the degree of cutting vibration when a material is cut by means of the tipped saw blade 10 is significantly reduced. As a result, in the first embodiment, disadvantages, such as a deterioration in the quality of the cutting surface clearly caused by the formation of tooth marks on the cutting surface that results from the cutting vibration, and the chipping of the edge portions at the front and rear of the surface being cut can be prevented with a degree of certitude.

Next, a modification of the first embodiment will be described.

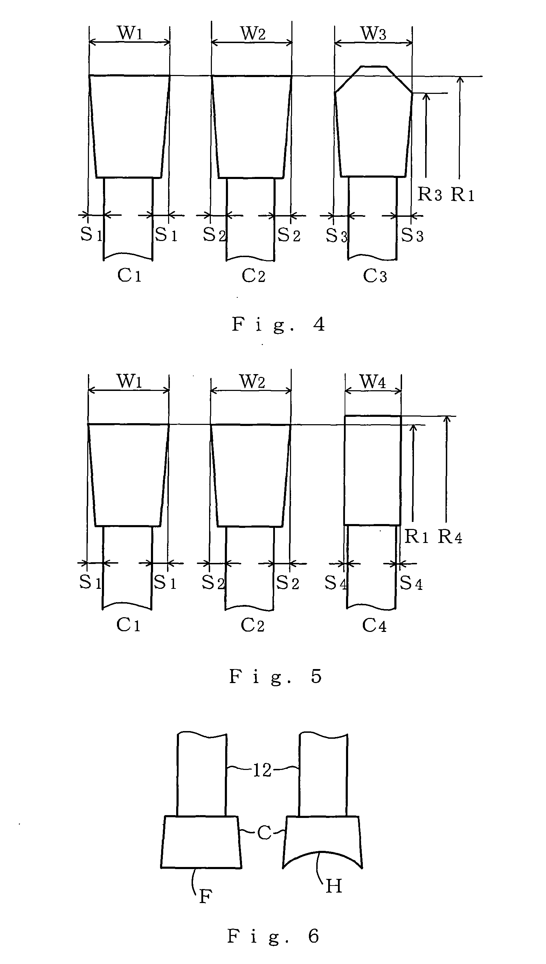

FIG. 3 is a front view showing the first tip Cm1 and second tip Cm2 attached to the tipped saw blade of the modification. In the first tip Cm1 and second tip Cm2 of the modification, the outer peripheral cutting edges are cut out at an oblique angle of substantially 45° on both sides in a width direction, and positions of the maximum width W1, W2 are located slightly inside the outer periphery in a diametrical direction. The first tip Cm1 has a Kerf cutting dimension S1 at a position at which the maximum width W1 is reached, and its rotational radius, at the position at which the maximum width W1 is reached, is R1. Further, the second tip Cm2 has a Kerf cutting dimension S2 at a position at which the maximum width W2 is reached, and its rotational radius, at the position at which the maximum width W2 is reached, is substantially R1. The Kerf cutting dimension S2 is shorter than the Kerf cutting dimension S1 by 0.01 to 0.05 mm. The arrangement of the first tip Cm1 and the second tip Cm2 on the base metal 11 is identical to that of the arrangement of the first tip C1 and second tip C2 in the first embodiment. The first modification having the above-described structure can obtain the same effects as in the first embodiment.

Although in the first embodiment and the modified embodiment, the tips are disposed on a plurality of tooth bodies 12 provided on the outer periphery of the base metal 11 of the tipped saw blade 10 in such a way that two first tips C1 and a second tip C2 appear consecutively, the tips may instead be disposed in a way such that, first, three first tips C1 and, then, a second tip C2 appear consecutively, and in this case also, the same effects as in the first embodiment can be obtained.

Specific examples of a cutting test in which cutting was executed by means of the tipped saw blade 10 of the first embodiment will now be described.

The test pieces included seven kinds, SFA000-SFA0060, as shown in Tables 1 to 3 below, and the differences between the first tip C1 and second tip C2 in the Kerf cutting dimension were respectively 0, 0.01 mm, 0.02 mm, 0.03 mm, 0.04 mm, 0.05 mm, 0.06 mm. As the arrangement of the first tips C1 and second tip C2, three examples were used in which the first tips C1 and second tip C2 were repeatedly disposed in ratios of 2:1, 3:1, and 1:1 in this order as indicated in Tables 1 to 3.

With regard to the specifications of the tipped saw blade, the first and second tips C1, C2 were fixed to the tooth bodies 12 on a base metal 11, that had for example, an outside diameter of 305 mmφ; the tooth thickness was 3.2 mm and the base metal thickness 2.0 mm; and the quantity of teeth was 42. The number of revolutions N of the tipped saw blade 10 was varied, by increases of 100 rpm on each occasion, between 2800 rpm and 5800 rpm. The feed rate of materials being cut was 10 m/min. The material cut was a spool (40 mm thick and 1000 mm long). After cutting had on each occasion been completed, the cutting surfaces of each test piece was evaluated visually. As evaluations standard, an excellent cutting surface has been expressed by means of a ○, an acceptable cutting surface, despite the occurrence of cutting vibration, has been expressed by means of a Δ, and a poor cutting surface with cutting vibration has been expressed by means of a ●. The test results are set out in Tables 1 to 3 below.

**[Table 1]**

| **Evaluation of cutting surface in a ratio of 2:1 arrangement** | | | | | | | | | | | | | | | | | |
|---|---|---|---|---|---|---|---|---|---|---|---|---|---|---|---|---|---|
| saw No. | N (rpm) × 100 | | | | | | | | | | | | | | | | (∗) |
| | 28 | 30 | 32 | 34 | 36 | 38 | 40 | 42 | 44 | 46 | 48 | 50 | 52 | 54 | 56 | 58 | |
| SFA000 | ● | Δ | ○ | ○ | ○ | ● | ○ | Δ | Δ | ● | ● | ● | Δ | ○ | ○ | ○ | NG |
| SFA010 | Δ | ○ | ○ | ○ | ○ | Δ | ○ | ○ | ○ | Δ | Δ | ○ | ○ | ○ | ○ | ○ | G |
| SFA020 | Δ | ○ | ○ | ○ | ○ | ○ | ○ | ○ | ○ | ○ | ○ | ○ | ○ | ○ | ○ | ○ | G |
| SFA030 | ○ | ○ | ○ | ○ | ○ | ○ | ○ | ○ | ○ | ○ | ○ | ○ | ○ | ○ | ○ | ○ | G |
| SFA040 | ○ | ○ | ○ | ○ | ○ | Δ | ○ | Δ | ○ | ○ | ○ | ○ | ○ | ○ | ○ | ○ | G |
| SFA050 | ○ | ○ | ○ | ○ | ○ | ○ | ○ | Δ | ○ | Δ | Δ | ○ | ○ | ○ | ○ | ○ | G |
| SFA060 | ○ | ○ | ○ | ○ | ○ | ○ | ○ | ● | ○ | ● | ● | ● | ○ | ○ | ○ | ○ | N G |

| | | | | | | | | | | | | | | | | | |
|---|---|---|---|---|---|---|---|---|---|---|---|---|---|---|---|---|---|
| (∗) total evaluation G : good N G : no good ● : poor cutting surface with cutting vibration Δ : acceptable cutting surface despite the occurrence of cutting vibration ○ : excellent cutting surface | | | | | | | | | | | | | | | | | |

**[Table 2]**

| **Evaluation of cutting surface in a ratio of 3:1 arrangement** | | | | | | | | | | | | | | | | | |
|---|---|---|---|---|---|---|---|---|---|---|---|---|---|---|---|---|---|
| saw No. | N (rpm) × 100 | | | | | | | | | | | | | | | | (∗) |
| | 28 | 30 | 32 | 34 | 36 | 38 | 40 | 42 | 44 | 46 | 48 | 50 | 52 | 54 | 56 | 58 | |
| SFA000 | ● | Δ | ○ | ○ | ○ | ● | ○ | Δ | Δ | ● | ● | ● | Δ | ○ | ○ | ○ | N G |
| SFA010 | Δ | ○ | ○ | Δ | Δ | ● | ○ | ○ | ○ | Δ | ● | Δ | ○ | ○ | ○ | ○ | NG |
| SFA020 | Δ | ○ | ○ | ○ | ○ | ○ | ○ | ○ | ○ | ○ | ○ | ○ | ○ | ○ | ○ | ○ | G |
| SFA030 | ○ | ○ | ○ | ○ | ○ | ○ | ○ | ○ | ○ | ○ | ○ | ○ | ○ | ○ | ○ | ○ | G |
| SFA040 | ○ | ○ | ○ | ○ | ○ | Δ | Δ | Δ | ○ | ○ | Δ | ○ | ○ | ○ | ○ | ○ | G |
| SFA050 | ○ | ○ | ○ | ○ | ○ | ○ | Δ | ● | ○ | Δ | ● | ○ | ○ | ○ | ○ | ○ | N G |
| SFA060 | ○ | ○ | ○ | ○ | ○ | ○ | ○ | ● | ○ | ● | ● | ● | Δ | ○ | ○ | ○ | N G |

| | | | | | | | | | | | | | | | | | |
|---|---|---|---|---|---|---|---|---|---|---|---|---|---|---|---|---|---|
| (∗) total evaluation G : good N G : no good ● : poor cutting surface with cutting vibration Δ : acceptable cutting surface despite the occurrence of cutting vibration ○ : excellent cutting surface | | | | | | | | | | | | | | | | | |

**[Table 3]**

| **Evaluation of cutting surface in a ratio of 1:1 arrangement** | | | | | | | | | | | | | | | | | |
|---|---|---|---|---|---|---|---|---|---|---|---|---|---|---|---|---|---|
| saw No. | N (rpm) × 100 | | | | | | | | | | | | | | | | (∗) |
| | 28 | 30 | 32 | 34 | 36 | 38 | 40 | 42 | 44 | 46 | 48 | 50 | 52 | 54 | 56 | 58 | |
| SFA000 | ● | Δ | ○ | ○ | ○ | ● | ○ | Δ | Δ | ● | ● | ● | Δ | ○ | ○ | ○ | N G |
| SFA010 | ● | ○ | ○ | Δ | Δ | ● | ○ | ○ | ○ | Δ | ● | ○ | ○ | ○ | ○ | ○ | N G |
| SFA020 | ● | ○ | Δ | ● | ○ | ○ | ○ | ● | Δ | Δ | ○ | ○ | ○ | ○ | ○ | ○ | N G |
| SFA030 | ○ | ○ | ○ | ○ | ○ | ● | ○ | ○ | ○ | Δ | ● | ● | ○ | ○ | ○ | ○ | N G |
| SFA040 | ○ | ○ | ○ | Δ | ○ | Δ | ○ | ● | ○ | ○ | Δ | ○ | ○ | ○ | ○ | ○ | N G |
| SFA050 | ○ | ○ | Δ | Δ | ○ | ○ | Δ | ● | ○ | Δ | ● | Δ | Δ | ○ | ○ | ○ | N G |
| SFA060 | ○ | ○ | ○ | ○ | ○ | ○ | ○ | ● | ○ | ● | ● | ● | ○ | Δ | ○ | ○ | N G |

| | | | | | | | | | | | | | | | | | |
|---|---|---|---|---|---|---|---|---|---|---|---|---|---|---|---|---|---|
| (∗) total evaluation G : good N G : no good ● : poor cutting surface with cutting vibration Δ : acceptable cutting surface despite the occurrence of cutting vibration ○ : excellent cutting surface | | | | | | | | | | | | | | | | | |

In examples in which first two first tips C1 and then a second tip C2 were repeatedly disposed in this order, as shown in Table 1, in the five types SFA010 - SFA050, in other words, within a range of 0.01 mm and 0.05 mm in difference between the Kerf cutting dimensions S1 and S2 of the first tip C1 and the second tip C2, visual evaluation was either ○ or Δ and results were determined to be excellent within this range. Further, in an example in which the first tips C1 and second tips C2 were repeatedly disposed in a ratio of 3:1, as shown in Table 2 in the tree types SFA020 - SFA040, in other words, within a range of 0.02 to 0.04 mm in difference between the cutting dimensions S1 and S2 of the first tip C1 and second tip C2, the visual evaluation was either ○ or Δ and results were determined to be excellent within this range. However, in an example in which the first tip C1 and second tip C2 were repeatedly disposed in a ratio of 1:1, in all seven types SFA000 - SFA060, visual evaluation was ● and results were determined to be unacceptable. The results of the test examples concern only the structure and the effects of the first embodiment.

Next, a second embodiment will be described. FIG. 4 is a front view showing the first tip C1, the second tip C2 and the third tip C3 of the second embodiment. The first tip C1 and the second tip C2 are the same as in the first embodiment. In the third tip C3, the outer peripheral blade is cut out at an oblique angle of substantially 45° on both sides in a width direction, and a position of the maximum width W3 is slightly inside the outer periphery in s diametrical direction. The third tip C3 has a Kerf cutting dimension S3 at the position of the maximum width W3 and a rotational radius, at the position of the maximum width W3, is R3. The Kerf cutting dimension S3 is shorter than the Kerf cutting dimension S1 of the first tip C1, and the rotational radius R3 is shorter than the rotational radius R1.

The third tips C3 are arranged on the base metal 11 in such a way that single third tips C3 appear between individual first tips C1, and between first tips C1 and second tips C2, or alternatively, as single third tips between only first tips C1, or alternatively, as single third tips between only first tips C1 and second tips C2. In the second embodiment with the above-described structure, the same effects as in the first embodiment can be obtained although a specific test example is not contained in this description.

Next, the third embodiment will be described. FIG. 5 is a front view showing the first tip C1, the second tip C2 and the fourth tip C4 of the third embodiment. The first tip C1 and the second tip C2 are identical to those in the first embodiment. The outer peripheral cutting edge of the fourth tip C4 is flat and its side face cutting edges are parallel to a diametrical direction. The radial angle of the fourth tip C4 is 0°, and the width W4 in the same. The fourth tip C4 has a Kerf cutting dimension S4 at an outer peripheral position that has a width W4, and a rotational radius is R4. The Kerf cutting dimension S4 is shorter than the Kerf cutting dimension S2 of the second tip C2 and the rotational radius R4 is larger than the rotational radius R1.

The fourth tips C4 are arranged on the base metal 11 in such a way that a single fourth tip C4 appears between first tips C1, and between first tips C1 and second tips C2, or alternatively, between first tips C1 only, or alternatively, between first tips C1 and second tips C2 only. In the fourth embodiment with the above-described structure, the same effects as in the first embodiment can be obtained although a specific test example is not contained in this description.

In the first to third embodiments, and in the modification, as shown in FIG. 6, the cutting face of the tip C may be a flat face F, or a circularly dented curved face H (hollow face). Although the first to third embodiments and the modified embodiment can succeed in reducing the degree of cutting vibration, with the tipped saw blade of this embodiment, or its modification the level of cutting vibration can be reduced even more effectively by combining technology for reducing the degree of vibration with, for example, the shape of a slit, or technology for reducing the degree of cutting vibration such as disposing teeth at a random pitch. The tipped saw blade indicated in the first and third embodiments and the modified embodiment are just examples and the present invention may be modified in a variety of ways within a range not departing from the spirit of the invention.

### INDUSTRIAL APPLICABILITY

According to the present invention, an arrangement of two or three first tips each having a Kerf cutting dimension S1 at a position at which the maximum width W1 is reached, and having a rotational radius R1, and a second tip having a Kerf cutting dimension S2 which is shorter than the S1 by 0.01 to 0.05 mm at the position at which the maximum width W2 is reached, and having a rotational radius that is substantially R1, is repeated. In consequence, the degree of cutting vibration of the tipped saw blade can be inhibited effectively, and advantages obtained of preventing a deterioration in the quality of the cutting surface that is caused by cutting vibrations and of preventing with a degree of certitude chipping of edge portions at the front and rear of the cutting surface.

## Claims

1. A tipped saw blade including a plurality of tooth bodies projecting outward in a diametrical direction at plural positions along an outer periphery of a disc-like base metal while a hard tip having a cutting edge symmetrical in a width direction is disposed on an outer peripheral side of each tooth body, wherein first tips and second tips are arranged consecutively such that first tips, each having a Kerf cutting dimension S1, which is a distance between an end portion in a width direction and a side face of a tooth body at a position at which a maximum width W1 is reached, and having a rotational radius R1 at a position at which a maximum width W1 is reached, first appear in twos or threes, and second tips, having a Kerf cutting dimension S2 at a position at which a maximum width W2 is reached, and having a rotational radius that is substantially R1, at the position at which the maximum width W2 is reached, then appear as single tip, and whereby the Kerf cutting dimension S2 is shorter than the Kerf cutting dimension S1 by 0.01 to 0.05 mm.

2. The tipped saw blade according to claim 1 wherein third tips, having a Kerf cutting dimension S3 which is shorter than the Kerf cutting dimension S1 at a position at which a maximum width W3 is reached, and at which a rotational radius R3, at the position at which the maximum width W3 is reached, is shorter than the rotational radius R1, appear between first tips, and/or between first tips and second tips, as single third tips, or on occasions do not appear at all.

3. The tipped saw blade according to claim 1 wherein fourth tips having a Kerf cutting dimension S4 which is shorter than the Kerf cutting dimension S2 at a position at which a maximum width W4 is reached, and at which a rotational radius R4, at the position at which the maximum width W4 is reached, is larger than the rotational radius R1, appear between first tips, and/or between first tips and second tips, as single fourth tips, or on occasions do not appear at all.
